# EUROPEAN PATENT APPLICATION

(11) **EP 1 092 734 A1**
(43) Date of publication of application: **18.04.2001**
(21) Application number: 00913028.7
(22) Date of filing: 31.03.2000
(51) Int. Cl.: C08F 226/02, C08F 220/58, E21B 21/00, C09K 7/02

(54) **REGULATOR FOR DIGGING MUD**

(30) Priority: 01.04.1999 JP 9471399; 30.09.1999 US 156873 P
(71) Applicant: SHOWA DENKO KABUSHIKI KAISHA, Tokyo 105-8518 (JP)
(72) Inventor: HAYASHI, Masahiro, Kawasaki Res.Lab. Cen. Res. Lab, Kawasaki-shi, Kanagawa 210-0858 (JP)
(74) Representative: Strehl Schübel-Hopf & Partner
(86) International application number: JP0002084
(87) International publication number: WO0059964

(57) **Abstract**

A novel copolymer which is obtained through copolymerization of
(A) N-vinylacetamide in an amount of 20-90 mass%;
(B) 2-acrylamido-2-methyl-propanesulfonic acid and/or a salt thereof in an amount of 7-70 mass%; and
(C) a vinyl monomer other than said (A) and (B) in an amount of 3-40 mass% (the total amount of said (A), (B) and (C) is 100%), and a drilling-mud-conditioning agent characterized by containing the copolymer.

A drilling-mud-conditioning agent of the present invention can impart to drilling mud high fluidity, lubricity, and resistance to loss of water, even under high-temperature and high-pressure conditions and when the drilling mud contains a large amount of salts.

## Description

### CROSS-REFERENCE TO RELATED APPLICATION

This application is an application filed under 35 U.S.C. §111(a) claiming benefit pursuant to 35 U.S.C. §119(e)(i) of the filing date of Provisional Application 60/156,873 filed September 30, 1999 pursuant to 35 U.S.C. §111(b).

### TECHNICAL FIELD

The present invention relates to a drilling-mud-conditioning agent used during ground drilling such as drilling of an oil well, drilling of a well for geothermal power generation, or civil engineering foundation work. More particularly, the invention relates to a drilling-mud-conditioning agent having excellent chemical stability at high temperature and salt resistance and novel copolymer used as a drilling-mud-conditioning agent.

### BACKGROUND ART

Conventionally, during ground drilling such as drilling of an oil well, drilling of a well for geothermal power generation, or civil engineering foundation work, a drilling-mud-conditioning agent such as a polymeric dispersant or a thickener is added to drilling mud which is used during deep ground drilling, by means of a drilling edge in order to convey drill-dust and maintain conditions of a tunnel wall. Such a drilling-mud-conditioning agent is required to provide appropriate lubricity to drilling mud in order to reduce the load imposed on a drilling machine at a portion where a drill edge contacts the ground and to provide high fluidity to drilling mud in order to facilitate conveyance of drill-dust by means of a pump. Particularly, when drilling is carried out at a level of 1000 m underground or deeper, water contained in drilling mud permeates a stratum due to high-pressure and high-temperature conditions, to thereby reduce water content of the drilling mud. As a result, the fluidity of the drilling mud is drastically lowered, and the mud may not be conveyed by means of a pump. In order to prevent loss of water, a drilling-mud-conditioning agent is also required to have performance for providing resistance to segregation of a suspension so as to maintain drilling mud in a homogeneous suspension state and for providing an appropriate water-retention property. Accordingly, a variety of polymeric additives have been used as drilling-mud-conditioning agents in order to satisfy the above demands; i.e., to control the viscosity, fluidity, and water-retention of drilling mud. Furthermore, these drilling-mud-conditioning agents are required to have heat resistance; i.e., resistance to thermal decomposition at a temperature as high as 150°C or higher during deep level drilling, and salt resistance; i.e., resistance to salt components such as brine contained in drilling mud.

Accordingly, in order to satisfy the aforementioned demands, a variety of polymeric drilling-mud-conditioning agents have been proposed. For example, Japanese Patent Application Laid-Open (*kokai*) 2-163189 discloses a 2-acrylamido-2-methyl-propanesulfonic acid salt/N,N-dimethylacrylamide/(meth)acrylic acid ester copolymer; Japanese Patent Application Laid-Open (*kokai*) 2-173085(U.S.Patent 4,921,621) discloses a partial hydrolyzate in N-vinylamide unit of an acrylamide/N-vinylamide copolymer; Japanese Patent Publication (*kokoku*) 6-25341 discloses a (meth)acrylamide/(meth)acrylic acid copolymer and a 2-acrylamido-2-methyl-propanesulfonic acid salt/amphoteric acrylamide-type vinyl monomer copolymer; and Japanese Patent Publication (*kokoku*) 2-023566(U.S.Patent 4,309,523) discloses a 2-acrylamido-2-methyl-propanesulfonic acid salt/vinylacylamide/acrylamide copolymer.

However, conventional drilling-mud-conditioning agents have drawbacks. One conventional drilling-mud conditioning agent has sufficient resistance to loss of water but fluidity is lowered due to excessively increased viscosity; another has sufficient heat resistance but has considerably poor resistance to loss of water due to divalent metal ions such as calcium and magnesium contained in drilling mud. It is very difficult to satisfy the aforementioned demands with well balance. Thus, a polymeric drilling-mud-conditioning agent satisfying all the demands is needed.

### DISCLOSURE OF THE INVENTION

In view of the forgoing, an object of the present invention is to provide a drilling-mud-conditioning agent which enables reduction of the load imposed on a drilling machine and conveyance of drilling mud effectively by imparting to the drilling mud high fluidity, lubricity, and resistance to loss of water, even when deep level drilling is carried out under high-temperature and high-pressure conditions and the drilling mud contains a large amount of salts.

The present inventors have conducted earnest studies, and have found that, among copolymers comprising monomers including N-vinylacylamide (including N-vinylformamide), a copolymer comprising monomers including N-vinylacetamide has remarkably excellent performance as a drilling-mud-conditioning agent which solves the aforementioned problems. The present invention has been accomplished on the basis of this finding.

Accordingly, the present invention provides the following drilling-mud-conditioning agents and novel copolymers:
[1] A drilling-mud-conditioning agent comprising :
   a copolymer which is obtained through copolymerization of (A)N-vinylacetamide in an amount of 20-90 mass%; (B)2-acrylamido-2-methyl-propanesulfonic acid and/or a salt thereof in an amount of 7-70 mass%; and at least one (C)vinyl monomer selected from the group consisting of (i)unsaturated carboxylic acid compound represented by the following formula (1): 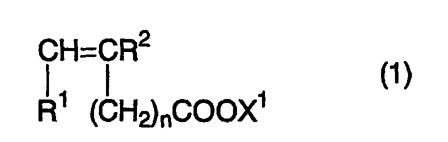 (wherein R¹ represents a hydrogen atom, a methyl group, or COOX²; R² represents a hydrogen atom, a methyl group, or COOX³; each of X¹, X², and X³ represents a hydrogen atom, an alkaline metal, an alkaline earth metal, an ammonium group, or an organic amino group; and n is 0 or 1), (ii) alkyl (meth)acrylate compound represented by the following formula (2): 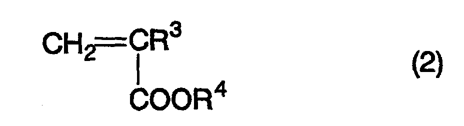 (wherein R³ represents a hydrogen atom or a methyl group; and R⁴ represents a linear or branched C1-C18 alkyl group), (iii) hydroxyalkyl (meth)acrylates, (iv) (meth)acrylonitrile, (v) N-alkylacrylamides, (vi) N, N-dialkylacrylamides, and (vii) vinyl acetate in an amount of 3-40 mass% (wherein the total amount of (A), (B) and (C) component is 100 %).
[2] A drilling-mud-conditioning agent as described in [1] above, wherein the mass average molecular weight of the copolymer is 100,000 to 5,000,000.
[3] A drilling-mud-conditioning agent as described in [1] or [2] above, wherein (C)the vinyl monomer is at least one unsaturated carboxylic acid compound selected from (i) (meth)acrylic acid, maleic acid, itaconic acid, and/or salts thereof.
[4] A drilling-mud-conditioning agent as described in [1] or [2] above, wherein (C)the vinyl monomer is at least one alkyl (meth)acrylate compound selected from (ii) methyl (meth)acrylate and ethyl (meth)acrylate.
[5] A drilling-mud-conditioning agent as described in [1] or [2] above, wherein (C)the vinyl monomer is at least one hydroxyalkyl (meth)acrylate compound selected from (iii) 2-hydroxyethyl (meth)acrylate and 2-hydroxypropyl (meth)acrylate.
[6] A drilling-mud-conditioning agent as described in [1] or [2] above, wherein (C)the vinyl monomer is (iv) (meth)acrylonitrile.
[7] A drilling-mud-conditioning agent as described in [1] or [2] above, wherein (C)the vinyl monomer is (v) N-alkylacrylamide compound.
[8] A drilling-mud-conditioning agent as described in [1] or [2] above, wherein (C)the vinyl monomer is (vi) N,N-dialkylacrylamide compound.
[9] A drilling-mud-conditioning agent as described in [1] or [2] above, wherein (C) the vinyl monomer is (vii) vinyl acetate.
[10] A drilling-mud-conditioning agent as described in [1] or [2] above, wherein (C)the vinyl monomer is (i) unsaturated carboxylic acid compound and (iv) (meth)acrylonitrile.
[11] A copolymer which is obtained through copolymerization of (A)N-vinylacetamide in an amount of 20-90 mass%; (B)2-acrylamido-2-methyl-propanesulfonic acid and/or a salt thereof in an amount of 7-70 mass%; and at least one (C)vinyl monomer selected from the group consisting of (i)unsaturated carboxylic acid compound represented by the following formula (1): 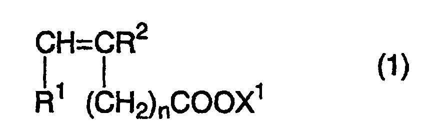 (wherein R¹ represents a hydrogen atom, a methyl group, or COOX²; R² represents a hydrogen atom, a methyl group, or COOX³; each of X¹, X², and X³ represents a hydrogen atom, an alkaline metal, an alkaline earth metal, an ammonium group, or an organic amino group; and n is 0 or 1), (ii)alkyl (meth)acrylate compound represented by the following formula (2): 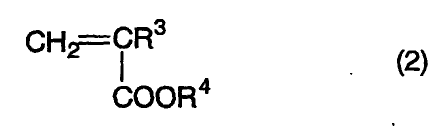 (wherein R³ represents a hydrogen atom or a methyl group; and R⁴ represents a linear or branched C1-C18 alkyl group), (iii)hydroxyalkyl (meth)acrylate compound, (iv)(meth)acrylonitrile, (v)N-alkylacrylamide compound, (vi)N,N-dialkylacrylamide compound, and (vii)vinyl acetate in an amount of 3-40 mass% (wherein the total amount of (A), (B) and (C) is 100 %), wherein the mass average molecular weight of the copolymer is 100,000 to 5,000,000.

### DETAILED DESCRIPTION OF THE INVENTION

The copolymer used in the present invention contains N-vinylacetamide as a (A) component in a compositional proportion of 20-90 mass%, preferably 30-70 mass%, based on all monomers. When the proportion is in excess of 90 mass%, the fluidity of the drilling mud may be reduced, whereas when the proportion is less than 20 mass%, heat resistance and salt resistance of the polymer tend to be reduced.

The copolymer used in the present invention contains 2-acrylamido-2-methyl-propanesulfonic acid and/or a salt thereof as a (B) component in a compositional proportion of 7-70 mass%, preferably 20-60 mass%, based on all monomers. When the proportion is in excess of 70 mass%, water retention of the drilling mud tends to decrease, whereas when the proportion is less than 7 mass%, the fluidity of the drilling mud tends to decrease.

Examples of 2-acrylamido-2-methyl-propanesulfonic acid and/or a salt thereof used in the present invention include 2-acrylamido-2-methyl-propanesulfonic acid, alkali metal salts, ammonium salts and organic ammonium salts thereof.

Examples of (i) unsaturated carboxylic acid compound used as a vinyl monomer (said (C) component) used in the copolymerization of the present invention include (meth)acrylic acid, crotonic acid, isocrotonic acid, maleic acid, fumaric acid, itaconic acid, etc. and salts thereof. Among these, (meth)acrylic acid, maleic acid, itaconic acid and salts thereof can be preferably used.

Examples of (ii)alkyl (meth)acrylates used as a vinyl monomer (said (C) component) include methyl (meth)acrylate, ethyl (meth)acrylate, propyl (meth)acrylate, isobutyl (meth)acrylate, 2-ethylhexyl (meth)acrylate, lauryl (meth)acrylate, and stearyl (meth)acrylate. Among these, methyl (meth)acrylate and ethyl (meth)acrylate are preferably used.

Examples of (iii) hydroxyalkyl (meth)acrylates used as a vinyl monomer (said (C) component) include (meth)acrylic acid ester of linear or branched aliphatic alcohol having 1 to 18 carbons such as 2-hydroxyethyl (meth)acrylate, 2-hydroxypropyl (meth)acrylate.

Examples of (iv)N-alkylacrylamides used as a vinyl monomer (said (C) component) include N-methylacrylamide, N-isopropylacrylamide.

Examples of (v)N,N-dialkylacrylamides used as a vinyl monomer (said (C) component) include N,N-dimethylacrylamide, N,N-diethylacrylamide.

In this specification and claims, the term "(meth)acrylate" refers to "methacrylate" or "acrylate" or mixture of these compounds, and the term "(meth)acrylonitrile" refers to "methacrylonitrile" or "acrylonitrile" or mixture of these compounds.

The copolymer used in the present invention contains the vinyl monomers as a (C) component at a compositional proportion of 3-40 mass%, preferably 3-30 mass%, based on all monomers. When the proportion is in excess of 40 mass% or less than 3 mass%, the drilling-mud-conditioning agent of the present invention exhibits poor performance.

No particular limitation is imposed on the process for producing the copolymer used in the present invention, and polymerization processes such as polymerization in aqueous solution, reverse phase suspension polymerization, and precipitation polymerization may be employed. Typically, the polymer is produced by use of a polymerization initiator.

Typically employed radical polymerization initiators may be used. Examples of initiators include azo compound initiators such as 2,2'-azobisisobutyronitrile, 2,2'-azobis(2-amidinopropane) dihydrochloride, 2,2'-azobis [2-(2-imidazolin-2-yl)propane] dihydrochloride, 2,2'-azobis [2-(3,4,5,6-tetrahydropyrimidin-2-yl)propane]dihydrochloride, and 2,2'-azobis[2-(5-hydroxy-3,4,5,6-tetrahydropyrimidin-2-yl)propane] dihydrochloride; peroxides such as hydrogen peroxide, benzoyl peroxide, t-butyl hydroperoxide, and succinic peroxide; and persulfate salts such as ammonium persulfate and potassium persulfate. In addition, a redox initiator; i.e., a system comprising a peroxide or persulfate salt and a reducing agent such as triethanolamine, sodium sulfite, or sodium thiosulfate, may also be used.

During polymerization, a chain-transfer agent may be used as a molecular-weight-controlling agent. Examples of chain-transfer agents include n-butylmercaptan, triethylamine, isopropyl, alcohol, ammonium thioglycolate, and sodium hypophosphite.

The copolymer used in the present invention may have a mass average molecular weight (as measured by gel permeation chromatography by use of pullulan as a standard substance) which may vary depending on the composition of suspended matter, the kind of ground, the kind and concentration of containing ion, species and amounts of other components such as dispersant of the drilling-mud-conditioning agent and on conditions such as pressure, temperature, drilling conditions, and the distance over which drilling mud is to be conveyed. Typically, the molecular weight is preferably 100,000 to 5,000,000. When the mass average molecular weight is less than 100,000, the drilling-mud-conditioning agent has an insufficient effect in imparting viscosity to the drilling mud and water retention in the drilling mud tends to decrease, whereas when it is in excess of 5,000,000, cohesive force of suspended matter increases excessively to thereby induce segregation of material in the drilling mud.

Although the amount of the drilling-mud-conditioning agent of the present invention which is added to drilling mud varies depending on the aforementioned conditions, the drilling-mud-conditioning agent is added typically in an amount of 0.005-3.0 mass% on a solid basis, preferably 0.5-2.0 mass%.

### BEST MODE FOR CARRYING OUT THE INVENTION

The present invention will next be described in detail by way of production examples of the copolymers, production examples of the comparative copolymers, and test example for evaluation of performance for the drilling mud conditioning agent using these copolymers, however, the present invention should not be construed as being limited the following examples. The % in the example below means mass% except for described otherwise.

### Production Example 1 : Production of copolymer(S1)

In a glass-made reactor equipped with a stirrer were placed a 10% aqueous solution of sodium 2-acrylamido-2-methyl-propanesulfonate (210g) and a 20% aqueous solution of sodium methacrylate (70g). N-vinylacetamide (35g) was added to the mixture with additional water (685g), to thereby dissolve N-vinylacetamide. The mixture was held at 50°C under agitation in a thermostat water bath, and dissolved oxygen was removed by passage of nitrogen. Subsequently, 2,2'-azobis(2-amidinopropane) dihydrochloride (0.5g) was added to cause polymerization with passage of nitrogen, to thereby obtain copolymer S1 (polymer content: 7%). The mass average molecular weight of (S1) was 3,080,000 as measured by gel permeation chromatography by use of pullulan as a standard substance.

### Production Examples 2 to 11 : Production of copolymers (S2 to S11)

The procedure of Production Example 1 was repeated, except that the species and amounts of monomers were altered as shown in Table 1, to thereby obtain copolymers (S2 to S11). The mass average molecular weight was measured in the same manner in production example 1, the results are shown in Table 1.

The meanings of abbreviations in Table 1 are described below.
NVA: N-vinylacetamide
AMPS-Na: sodium 2-acrylamido-2-methyl-propanesulfonate
MA-Na: sodium methacrylate
MAA: methyl acrylate
HEA: hydroxyethyl acrylate
DMAAM: N,N-dimethylacrylamide
AN: acrylonitrile

**Table 1**

| Copolymer | Compositional proportions of monomers (mass%) | | | | | | | Mass. av. mol. wt. (x10⁴) |
|---|---|---|---|---|---|---|---|---|
| | NVA | AMPS-Na | Monomer A | | | | | |
| | | | MA-Na | MAA | HEA | DMAAM | AN | |
| S1 | 50 | 30 | 20 | | | | | 308 |
| S2 | 50 | 40 | 10 | | | | | 301 |
| S3 | 40 | 50 | 10 | | | | | 287 |
| S4 | 40 | 45 | | 15 | | | | 240 |
| S5 | 50 | 45 | | 5 | | | | 256 |
| S6 | 40 | 50 | | | 10 | | | 268 |
| S7 | 40 | 50 | | | | 10 | | 283 |
| S8 | 50 | 40 | | | | | 10 | 262 |
| S9 | 40 | 30 | 20 | | | | 10 | 273 |
| S10 | 40 | 40 | 10 | | | | 10 | 264 |
| S11 | 40 | 50 | 5 | | | | 5 | 266 |

### Comparative Production Examples 1 to 5 : Production of copolymers (R1 to R5)

Each of the procedures of Production Examples 1 to 11 was repeated, except that the species and amounts of monomers were altered as shown in Table 2, to thereby obtain the Comparative copolymers (R1 to R5). The mass average molecular weight was measured in the same manner as in production example 1. The results are shown in Table 2.

The meanings of abbreviations in Table 2 are described below.
NVF: N-vinylformamide
NVNMA: N-vinyl-N-methylacetamide
AAM: acrylamide

**Table 2**

| Comp. Copolymer | Compositional proportions of monomers (mass %) | | | | | | Mass. av. mol. wt. (×10⁴) |
|---|---|---|---|---|---|---|---|
| | NVF | NVNMA | AAM | AMPS-Na | MA-Na | MAA | |
| R1 | 50 | | | 50 | | | 231 |
| R2 | | 50 | | 50 | | | 235 |
| R3 | | 50 | | 30 | 20 | | 269 |
| R4 | | 40 | | 45 | | 15 | 228 |
| R5 | | | 50 | 50 | | | 281 |

### Test example 1 : Evaluation of performance-1 as a drilling-mud-conditioning agent

Each of copolymers produced in Production Examples 1 to 11 and Comparative Production Examples 1 to 5 was added to artificially prepared drilling mud so as to evaluate performance as a drilling-mud-conditioning agent.

### (1-1) Preparation of drilling mud

Two types of mud, Mud-1 and Mud-2 having the following compositions, were prepared.
Mud-1: A 20% aqueous solution of artificial sea salt (composition: NaCl; 58.5%, MgCl₂·6H₂O; 26.5%, Na₂SO₄; 9.8%, CaCl₂ 2.8%, KCl; 1.6% and others) was prepared. Bentonite was added to the solution such that the amount thereof became 4% based on the total amount, and the mixture was stirred for 30 minutes.
Mud-2: Sodium chloride (300g), calcium chloride dihydrate (50g), and magnesium chloride hexahydrate (100g) were dissolved in water (1L) to produce a solution. Bentonite was added to the solution such that the amount thereof became 4% based on the total amount, and the mixture was stirred for 30 minutes.

### (1-2) Addition of copolymer

An aqueous solution (170g) containing one of the copolymers obtained in Production Examples and Comparative Production Examples was added to each of the above-prepared Mud-1 and Mud-2 (1000g), and the mixture (polymer solid content 1% based on the total amount) was stirred to thereby dissolve the added copolymer and was subsequently allowed to stand for 15 hours at room temperature.

### (1-3) Test for evaluating drilling mud

The apparent viscosity, plastic viscosity, yield value, gel strength (after 10 seconds), and amount of water liberation were measured on the basis of the applicable API (American Petroleum Institute) standards.

The test results using Mud-1 are shown in Table 3 and the test results using Mud-2 are shown in Table 4. The meanings of abbreviations in Tables 3 and 4 are described below.
- AV;: apparent viscosity (mPa·s)
- PV;: plastic viscosity (mPa·s)
- YV;: yield value (lb/100ft²)
- GS;: gel strength (after 10 seconds) (lb/100ft²)
- WL:: amount of water liberation (ml)

**Table 3**

| Sample | | AV (mPa·s)(mPa·s) | PV | YV (lb/100ft²) | GS (lb/100ft²) | WL (ml) |
|---|---|---|---|---|---|---|
| Copolymer | S1 | 21 | 17 | 8 | 2-4 | 7.7 |
| | S2 | 21 | 17 | 9 | 2-4 | 7.4 |
| | S3 | 22 | 17 | 8 | 2-4 | 6.9 |
| | S4 | 23 | 19 | 10 | 2-4 | 7.3 |
| | S5 | 22 | 19 | 9 | 2-4 | 7.3 |
| | S6 | 22 | 18 | 10 | 1-4 | 8.1 |
| | S7 | 20 | 17 | 9 | 2-4 | 7.8 |
| | S8 | 23 | 20 | 10 | 2-4 | 6.6 |
| | S9 | 24 | 20 | 11 | 2-4 | 6.4 |
| | S10 | 23 | 19 | 10 | 1-4 | 6.6 |
| | S11 | 22 | 16 | 10 | 1-4 | 7.5 |
| Comp. Copolymer | R1 | 18 | 16 | 8 | 2-6 | 12.8 |
| | R2 | 17 | 14 | 7 | 1-4 | 10.6 |
| | R3 | 17 | 14 | 6 | 1-4 | 11.4 |
| | R4 | 16 | 13 | 6 | 1-4 | 10.3 |
| | R5 | 19 | 16 | 10 | 3-7 | 15.9 |

**Table 4**

| Sample | | AV (mPa·s) | PV (mPa·s) | YV (lb/100ft²) | GS (lb/100ft²) | WL (ml) |
|---|---|---|---|---|---|---|
| Copolymer | S1 | 18 | 14 | 7 | 1-3 | 9.1 |
| | S2 | 18 | 15 | 7 | 2-4 | 9.0 |
| | S3 | 18 | 14 | 7 | 2-4 | 8.6 |
| | S4 | 19 | 15 | 9 | 2-4 | 9.2 |
| | S5 | 18 | 16 | 8 | 2-3 | 9.0 |
| | S6 | 18 | 16 | 9 | 1-3 | 8.6 |
| | S7 | 19 | 14 | 8 | 2-4 | 8.7 |
| | S8 | 19 | 16 | 10 | 2-4 | 8.9 |
| | S9 | 20 | 17 | 10 | 2-4 | 8.3 |
| | S10 | 20 | 16 | 9 | 1-4 | 8.4 |
| | S11 | 18 | 16 | 9 | 2-4 | 9.2 |
| Comp. Coplymer | R1 | 17 | 14 | 9 | 2-5 | 13.1 |
| | R2 | 15 | 12 | 8 | 1-4 | 14.0 |
| | R3 | 15 | 12 | 7 | 1-4 | 13.8 |
| | R4 | 16 | 13 | 8 | 1-3 | 13.5 |
| | R5 | 17 | 14 | 9 | 2-6 | 14.4 |

### Test example 2 : Evaluation of performance-2 as a drilling-mud-conditioning agent

### (2-1) Preparation of drilling mud

The procedure of "Evaluation of performance-1 as a drilling-mud-conditioning agent" was repeated, to thereby prepare Mud-1 and Mud-2.

### (2-2) Addition of copolymer

An aqueous solution of one of the copolymers (170g) obtained in Production Examples and Comparative Production Examples was added to each of the above-prepared types of drilling mud (1000g), and the mixture (polymer solid content 1% based on the total amount) was stirred to thereby dissolve the added copolymer and was subsequently treated at 200°C for 10 hours in an autoclave.

### (2-3) Test for evaluating drilling mud

The same procedure as in above described "Evaluation of performance-1 as a drilling-mud-conditioning agent" was repeated.

The test results using Mud-1 are shown in Table 5 and the test results using Mud-2 are shown in Table 6.

The meaning of abbreviations(AV, PV, YV, GS, and WL) in Tables 5 and 6 are the same as described in Table 3.

**Table 5**

| Sample | | AV (mPa·s) | PV (mPa·s) | YV (lb/100ft²) | GS (lb/100ft²) | WL (ml) |
|---|---|---|---|---|---|---|
| Copolymer | S1 | 29 | 25 | 16 | 3-7 | 13.2 |
| | S2 | 28 | 25 | 17 | 3-8 | 13.1 |
| | S3 | 28 | 25 | 16 | 3-7 | 12.8 |
| | S4 | 30 | 27 | 18 | 2-8 | 12.9 |
| | S5 | 33 | 29 | 17 | 4-8 | 12.2 |
| | S6 | 31 | 29 | 16 | 3-8 | 13.6 |
| | S7 | 34 | 30 | 18 | 3-8 | 12.9 |
| | S8 | 32 | 27 | 17 | 3-8 | 13.3 |
| | S9 | 32 | 25 | 18 | 3-7 | 13.3 |
| | S10 | 31 | 26 | 17 | 3-8 | 12.5 |
| | S11 | 32 | 28 | 16 | 4-7 | 13.0 |
| Comp. Copolymer | R1 | 57 | 49 | 28 | 4-17 | 31.3 |
| | R2 | 49 | 44 | 23 | 3-19 | 25.6 |
| | R3 | 53 | 48 | 25 | 4-21 | 28.8 |
| | R4 | 52 | 47 | 23 | 3-19 | 26.4 |
| | R5 | 68 | 53 | 31 | 3-20 | 40.5 |

**Table 6**

| Sample | | AV (mPa·s) | PV (mPa·s) | YV (lb/100ft²) | GS (lb/100ft²) | WL (ml) |
|---|---|---|---|---|---|---|
| Copolymer | S1 | 25 | 20 | 14 | 4-10 | 15.3 |
| | S2 | 26 | 21 | 14 | 4-10 | 14.9 |
| | S3 | 26 | 22 | 13 | 4-10 | 14.8 |
| | S4 | 29 | 23 | 15 | 3-9 | 14.8 |
| | S5 | 24 | 23 | 15 | 5-11 | 15.5 |
| | S6 | 28 | 27 | 14 | 4-11 | 16.0 |
| | S7 | 27 | 23 | 16 | 4-10 | 14.7 |
| | S8 | 28 | 26 | 15 | 4-10 | 14.2 |
| | S9 | 28 | 25 | 16 | 4-9 | 13.9 |
| | S10 | 28 | 25 | 15 | 5-12 | 14.0 |
| | S11 | 25 | 26 | 15 | 4-10 | 14.3 |
| Comp. Copolymer | R1 | 60 | 52 | 33 | 6-25 | 40.1 |
| | R2 | 52 | 47 | 22 | 4-21 | 33.3 |
| | R3 | 50 | 52 | 27 | 5-23 | 38.6 |
| | R4 | 54 | 51 | 25 | 5-22 | 34.4 |
| | R5 | 79 | 61 | 38 | 7-29 | 49.9 |

As is clear from the results in Tables 3 to 6, the drilling-mud-conditioning agents obtained in Production Examples 1 to 11 exhibit low water liberation; i.e., low loss of water, even in drilling mud containing a large amount of salts, as compared with the drilling-mud-conditioning agents obtained in Comparative Production Examples 1 to 5. Particularly, the difference was observed to be remarkable in the case in which a mud sample had been subjected to high-temperature conditions(Test example 2, Table 6). Thus, the results indicate that the drilling-mud-conditioning agent of the present invention exhibits excellent chemical stability at high temperature and salt resistance.

### INDUSTRIAL APPLICABILITY

The drilling-mud-conditioning agent of the present invention enables a reduction in the load imposed on a drilling machine and effective conveyance of drilling mud, by imparting high fluidity, lubricity, and resistance to loss of water to the drilling mud, even when deep level drilling is carried out under high-temperature and high-pressure conditions and the drilling mud contains a large amount of salts.

## Claims

1. A drilling-mud-conditioning agent comprising :
a copolymer which is obtained through copolymerization of (A)N-vlnylacetamide in an amount of 20-90 mass%; (B)2-acrylamldo-2-methyl-propanesulfonic acid and/or a salt thereof in an amount of 7-70 mass%; and at least one (C)vinyl monomer selected from the group consisting of (i)unsaturated carboxylic acid compound represented by the following formula (1): 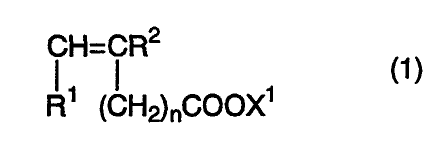 (wherein R¹ represents a hydrogen atom, a methyl group, or COOX², R² represents a hydrogen atom, a methyl group, or COOX³; each of X¹, X², and X³ represents a hydrogen atom, an alkaline metal, an alkaline earth metal, an ammonium group, or an organic amino group; and n is 0 or 1), (ii) alkyl (meth)acrylate compound represented by the following formula (2): 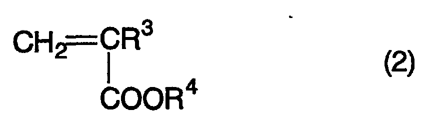 (wherein R³ represents a hydrogen atom or a methyl group; and R⁴ represents a linear or branched C1-C18 alkyl group), (iii) hydroxyalkyl (meth)acrylates, (iv) (meth)acrylonitrile, (v) N-alkylacrylamides, (vi) N, N-dialkylacrylamides, and (vii) vinyl acetate in an amount of 3-40 mass% (wherein the total amount of said (A), (B) and (C) component is 100%).

2. A drilling-mud-conditioning agent according to claim 1, wherein the mass average molecular weight of the copolymer is 100,000 to 5,000,000.

3. A drilling-mud-conditioning agent according to claim 1 or 2, wherein (C)the vinyl monomer is at least one unsaturated carboxylic acid compound selected from (i) (meth)acrylic acid, maleic acid, itaconic acid, and/or salts thereof.

4. A drilling-mud-conditioning agent according to claim 1 or 2, wherein (C)the vinyl monomer is at least one alkyl (meth)acrylate compound selected from (ii) methyl (meth)acrylate and ethyl (meth) acrylate.

5. A drilling-mud-conditioning agent according to claim 1 or 2, wherein (C) the vinyl monomer is at least one hydroxyalkyl (meth)acrylate compound selected from (iii) 2-hydroxyethyl (meth)acrylate and 2-hydroxypropyl (meth)acrylate.

6. A drilling-mud-conditioning agent according to claim 1 or 2, wherein (C)the vinyl monomer is (iv) (meth)acrylonitrile.

7. A drilling-mud-conditioning agent according to claim 1 or 2, wherein (C)the vinyl monomer is (v) N-alkylacrylamide compound.

8. A drilling-mud-conditioning agent according to claim 1 or 2, wherein (C) the vinyl monomer is (vi) N,N-dialkylacrylamide compound.

9. A drilling-mud-conditioning agent according to claim 1 or 2, wherein (C) the vinyl monomer is (vii) vinyl acetate.

10. A drilling-mud-conditioning agent according to claim 1 or 2, wherein the (C) vinyl monomer is (i) unsaturated carboxylic acid compound and (iv) (meth)acrylonitrile.

11. (Canceled)
